# EUROPÄISCHE PATENTANMELDUNG

(11) **EP 1 377 060 A1**
(43) Veröffentlichungstag der Anmeldung: **02.01.2004**
(21) Anmeldenummer: 02013822.8
(22) Anmeldetag: 21.06.2002
(51) Int. Cl.: H04N 7/173, H04N 5/00

(54) **Videostreamingübertragung von Live-Inhalten**

(71) Anmelder: Adler, Helmut, 57223 Kreuztal (DE); Kleber, Petra, 57299 Burbach (DE)
(72) Erfinder: Kleber, Petra, 57299 Burbach (DE); Bluhm, Helmut, 57271 Hilchenbach (DE); Adler, Helmut, 57223 Kreuztal (DE)
(74) Vertreter: Grünecker, Kinkeldey, Stockmair & Schwanhäusser Anwaltssozietät

(57) **Zusammenfassung**

Eine Livestreamingtechnik wird bereitgestellt, bei der sich Clientrechner, die von Endnutzern betrieben werden, über Telefondirektleitungen oder andere Direktverbindungen mit einem Videostreamserver verbinden und von diesem Streamingdaten anfordern. Der Server nimmt die Anforderungen entgegen und verteilt sie an einen jeweiligen Encoderrechner aus einer Vielzahl von Encoderrechnern. Die von diesem Encoderrechner angeforderten Videostreamdaten nimmt der Server in Empfang und leitet sie an den oder die anfordernden Clientrechner weiter. In einer bevorzugten Ausführung wird eine unidirektionale Chatmöglichkeit bereitgestellt. Ferner kann die Tarifierbarkeit variabel gestaltet sein. Über die Direktleitung werden vorzugsweise auch Daten in einem Datenformat gemäß Internetprotokollen übersandt. Diese Internetdaten können regelmäßig aktualisiert werden.

## Beschreibung

Die Erfindung betrifft Videostreamserver, Encoder und Clientrechner sowie zugehörige Verfahren und insbesondere solche Videostreamingtechniken, die sich mit der Übertragung von Liveinhalten befassen.

Eine Übertragung von Audio-Nideostreamingdaten gestattet die Versendung von Bild- und Klangdaten in Echtzeit von einer Streamingquelle zum Zielrechner. An der Streamingquelle werden die Audio-Nideodaten entweder aus einem Speicher ausgelesen oder, bei Übertragung von Liveinhalten, unmittelbar vor Versendung der Daten mittels einer Videokamera gewonnen. Die Streamingquelle arbeitet dann als Codiervorrichtung (Encoder), um die Videostreamdaten zu erzeugen.

Insbesondere für Livestreamingsysteme ergeben sich eine Vielzahl von Anwendungsfällen. Beispielsweise kann eine Verbindung zu einem Studio hergestellt werden, um von einem Experten Liveinformationen abzurufen bzw. zu erfragen, beispielsweise Wirtschaftsinformationen von einem Börsenspezialisten. Ferner können Livetalkshows und Showprogramme mit professionellen und Nachwuchskünstlern in Echtzeit übertragen werden. Andere Beispiele umfassen Sportberichte, Interviews, Liveevents und Konzertveranstaltungen sowie Gewinnspiele und Verkaufsveranstaltungen. Schließlich lassen sich Livestreamingsysteme hervorragend für ortsungebundene Lehrveranstaltungen verwenden.

In allen diesen Anwendungen ist der Endnutzer (Client) gezwungen, eine hochdatenratige Direktverbindung zu dem jeweiligen Anbieter aufzubauen und zu unterhalten. Dies erfordert zum einen erhöhte Hardwarekosten auf Endnutzerseite und erschwert zudem die tatsächliche Nutzung der Dienste, da auch softwareseitig jeweils spezielle Treiber installiert und geladen werden müssen. Sowohl die Hardware als auch die Software, die zum Abrufen von Livestreamingdaten verschiedener Anbieter verwendet werden, stören sich oft gegenseitig und verunmöglichen mitunter sogar den Abruf einzelner Dienste.

Der Erfindung liegt daher die Aufgabe zugrunde, eine Videolivestreamingtechnik anzugeben, die dem Endnutzer die Nutzung verschiedener Dienste in unkomplizierter Weise gestattet.

Diese Aufgabe ist durch die in den unabhängigen Ansprüchen angegebene Erfindung gelöst.

Demnach wird ein zentraler Videostreamserver bereitgestellt, mit dem eine Vielzahl von Endnutzern über Telefondirektleitungen wie etwa ISDN-Verbindungen verbunden werden können. Der Server wiederum kann eine Vielzahl von Verbindungen zu Streamingquellen unterhalten. Somit wird dem einzelnen Endnutzer lediglich auferlegt, eine Verbindung zum Server zu unterhalten. Der Server wiederum wickelt dann das Verbindungsmanagement zu den einzelnen Encodern ab.

Bevorzugte Ausgestaltungen der Erfindung sind in den Unteransprüchen angegeben.

Durch die Verwendung von Internetprotokollen auf Telefondirektverbindungen wird in vorteilhafter Weise ein weitverbreiteter Standard zur Datenübertragung verwendet, der es gestattet, zahlreiche bei den Endnutzern bereits vorinstallierte Softwarekomponenten zu verwenden, obwohl die Streamingübertragung ausschließlich über eine Telefondirektverbindung stattfindet, also außerhalb des Internets.

Die Verwendung von Internetprotokollen ermöglicht ferner in vorteilhafter Weise die Darstellung der Streamingdaten auf einer Anzeigevorrichtung des Endnutzers in einer Weise, die vom Endnutzer als in eine Internetseite integriert wahrgenommen wird. Der Endnutzer bedient hierzu beispielsweise einen Webbrowser, der um entsprechende Streamingsoftware erweitert worden ist. Alternativ bedient der Endnutzer eine spezielle Streamingsoftware, die die Funktionalität eines Webbrowsers aufweist und so vom Endnutzer intuitiv bedienbar ist. Werden die vom Videostreamserver an den Endnutzer über die Telefondirektleitung übertragenen Internetprotokolldaten regelmäßig aktualisiert, so gestattet dies die parallele Übertragung von Zusatzinformationen an den Endnutzer, so dass dieser stets aktuelle Informationen wie etwa die verstrichene Zeit, die Restzeit, die angefallenen Gebühren etc. erhält. Ferner gestattet die regelmäßige Aktualisierung der Internetprotokolldaten die Einbindung von wechselnden Werbeflächen.

Weist die Livestreamtechnik eine Chatfunktionalität auf, so kann der Endnutzer in die in dem Studio gerade stattfindenden Abläufe in vorteilhafter Weise interaktiv eingreifen, indem er beispielsweise Fragen an den Börsenexperten stellt oder Wünsche äußert. Ist die Chatfunktionalität unidirektional gestaltet, wird die Datentransferrate in vorteilhafter Weise gesenkt und die benötigte Übertragungsbandbreite sichergestellt. Auch bei einer unidirektionalen Chatübertragung ist volle Interaktivität sichergestellt, da die Studioteilnehmer mit dem Endnutzer im Wege der Audio-Videostreamingdaten kommunizieren können.

Ist das System mit einer variablen Tarifierbarkeit ausgestattet, so kann der Endnutzer nicht nur zwischen verschiedenen Diensten einer Tarifkategorie auswählen, sondern sogar zu Diensten wechseln, die eine andere Kostenstruktur aufweisen. Beispielsweise kann der Endnutzer zunächst einem von Nachwuchskünstlern aufgeführten Schauspiel beiwohnen und dann zu einem professionell vorgeführten Schauspiel wechseln, für das höhere Gebühren anfallen. Ein solcher Wechsel ist für den Endnutzer in vorteilhafter Weise nicht mit einer Neuinstallation zusätzlicher Software verbunden.

Weitere Vorteile ergeben sich aus Anordnungen, bei denen die einzelnen Streamingquellen über jeweils mehr als eine Videokamera verfügen. Dies gestattet dem Endnutzer nicht nur die Auswahl verschiedener Perspektiven, was einen zusätzlichen Anreiz zur Nutzung des Lifvestreamingsystems darstellt, sondern auch der Studiobetreiber kann über den Vorteil verfügen, durch den Perspektivwechsel zusätzliche Dramaturgieeffekte zu erzielen oder auch bei einer Abfolge von einzelschauspielerischen Darstellungen von einem Schauspieler zum anderen Schauspieler zu wechseln.

Weitere Vorteile werden aus der nachfolgenden Beschreibung von Ausführungsbeispielen der Erfindung ersichtlich, die anhand der beigefügten Zeichnungen erfolgt, in denen:
Figur 1 ein Blockdiagramm ist, das eine bevorzugte Ausgestaltung des erfindungsgemäßen Livestreamingsystems darstellt;
Figur 2 ein Flussdiagramm ist, das eine bevorzugte Ausgestaltung des Betriebsverfahrens für einen Clientrechner in dem System von Figur 1 darstellt;
Figur 3 ein Flussdiagramm der im Prozess von Figur 2 durchgeführten Hardwareerkennung ist;
Figur 4 ein Flussdiagramm des im Prozess von Figur 2 durchgeführten Verbindungsaufbaus ist;
Figur 5 ein Flussdiagramm des im Prozess von Figur 2 durchgeführten Videoauswahlprozesses ist;
Figur 6 ein Flussdiagramm der im Prozess von Figur 2 durchgeführten Nachrichtenübermittlung ist; und
Figur 7 ein Flussdiagramm einer bevorzugten Ausgestaltung eines Betriebsverfahrens eines Encoderrechners ist.

Anhand der beigefügten Zeichnungen werden im Folgenden bevorzugte Ausgestaltungen der Erfindung erläutert.

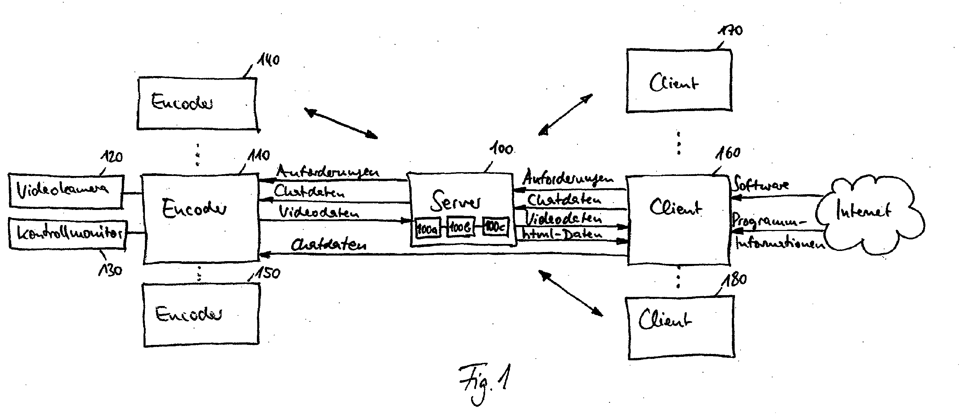

Figur 1 zeigt eine bevorzugte Ausgestaltung eines erfindungsgemäßen Livestreamingsystems. Zentraler Bestandteil ist der Videostreamserver 100, der mit einer Vielzahl von Clientrechnern 160, 170, 180 sowie einer Vielzahl von Encoderrechnern 110, 140, 150 verbunden ist bzw. verbunden werden kann. Der Server verfügt über jeweilige Datensendeempfangseinrichtungen 100a, 100c sowie über eine Steuereinrichtung 100b.

Die Clientrechner 160, 170, 180 können Anforderungen für Streamingdaten an den Server 100 senden. Ferner können die Clientrechner Chatdaten an den Server oder über eine direkte Leitung an einen Encoderrechner 110, 140, 150 senden. Vom Server 100 empfangen die Clientrechner die angeforderten Videodaten sowie Daten in einem Internetprotokollformat, z.B. HTML-Daten, Daten in Mediastreamformaten und Daten in Datenpaketen gemäß dem TCP/IP-Standard.

Die Clientrechner 160, 170, 180 sind ferner vorzugsweise mit dem Internet verbindbar zum Herunterladen benötigter Streamingsoftware sowie weiterer Informationen über Videoprogramminhalte. Programminformationen können alternativ oder zusätzlich auch vom Server 100 empfangen werden. Alternativ zum Download aus dem Internet kann die benötigte Software auch von einem Datenträger gelesen oder als Anhang einer E-Mail empfangen werden.

Die Verbindung zwischen Client 160, 170, 180 und Server 100 ist erfindungsgemäß eine Direktleitung worunter insbesondere Telefondirektleitungen wie etwa ISDN-Verbindungen sowie gebündelte Telefon- und ISDN-Verbindungen verstanden werden. Alternativ können die Direktverbindungen auch Standleitungen oder andere Punkt-zu-Punkt-Datenstrecken mit hinreichender Übertragungsbandbreite sein. Vorzugsweise wird die Verbindung zwischen Client 160, 170, 180 und Server 100 mittels zweier ISDN-Leitungen durchgeführt, um die erforderliche Datenrate zu erzielen.

Der Videostreamserver 100 ist ferner mit wenigstens einem einer Vielzahl von Encodern 110, 140 150 verbunden, um Streamdatenanforderungen und gegebenenfalls auch Chatdaten in das jeweilige diensteanbietende Studio zu senden. Vom Encoder 110, 140, 150 werden die angeforderten Videodaten empfangen. Diese Daten werden vom Server 100 an den entsprechenden Client 160, 170, 180 weitergeleitet.

Es ist anzumerken, dass unter Videodaten insbesondere auch Audio-Nideodaten verstanden werden.

Die Encoder 110, 140, 150 verfügen über jeweils wenigstens eine Videokamera 120 sowie vorzugsweise über einen Kontrollmonitor 130. Die Videokamera 120 nimmt die Videodaten auf, die dann vom jeweiligen Encoder 110, 140, 150 codiert und als Digitaldaten an den Server 100 gesandt werden. Der Kontrollmonitor 130 dient zur Anzeige der von dem jeweiligen Endnutzer eingegebenen Chatinformationen und kann darüber hinaus weitere Informationen liefern, wie beispielsweise die Anzahl der verbundenen Endnutzer.

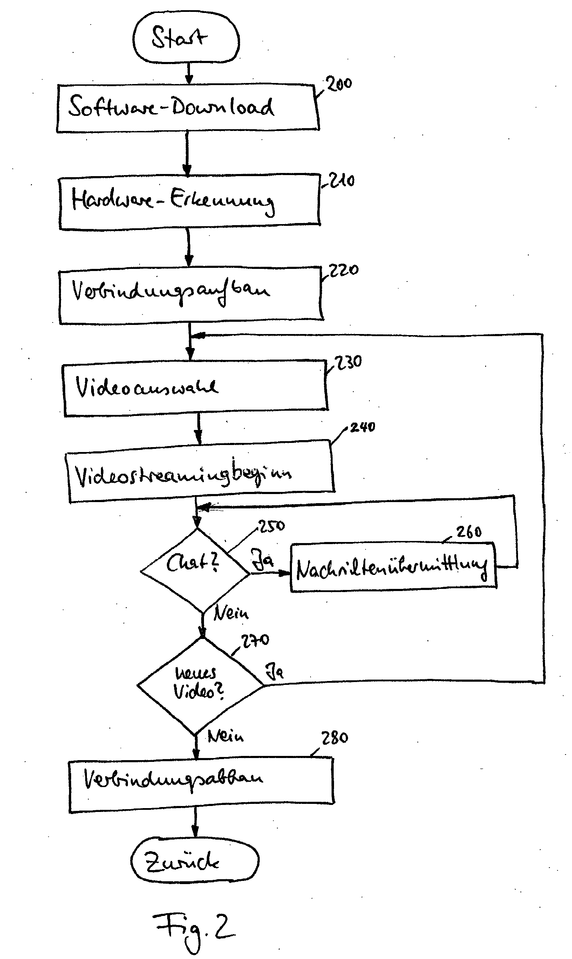

Der Betrieb des in Figur 1 dargestellten Livestreamingsystems wird im Folgenden unter Bezugnahme der Flussdiagramme der Figuren 2 bis 7 näher erläutert. Wird zunächst auf Figur 2 Bezug genommen, so stellt sich ein beispielhafter Betriebsprozess eines Clientrechners 160, 170, 180 wie folgt dar.

Zunächst lädt sich ein potentieller Endnutzer aus dem Internet von einer Internetseite eine Software auf seinen Computer 160, 170, 180 (Schritt 200). Wie bereits erwähnt, kann die Software alternativ auch über einen Datenträger, per E-Mail oder auf sonstigen Wegen erworben werden. Der Clientrechner 160, 170, 180 ist vorzugsweise ein handelsüblicher Personalcomputer.

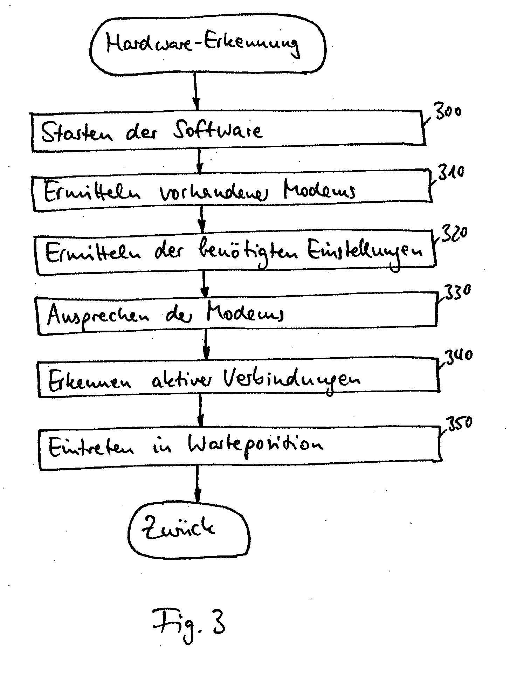

Nach erfolgtem Softwaredownload und nach Durchführung des Installationsprozesses der Software findet eine Hardwareerkennung statt (Schritt 210). Diese ist in weiteren Einzelheiten in Figur 3 dargestellt.

Zunächst startet der Endnutzer in Schritt 300 die zuvor heruntergeladene Software. Es ist anzumerken, dass der Nutzer auch eine bereits früher installierte Software verwenden kann, falls diese auf dem Rechner installiert ist. In diesem Fall erfordert das Starten der Software in Schritt 300 keine unmittelbar zuvor durchgeführte Softwareinstallation.

Die gestartete Software überprüft nun die auf dem Clientrechner 160, 170, 180 vorhandene Hardware. Zunächst ermittelt die Software aus der Windows-Registry die Liste aller potentiellen Modems und der zugehörigen benötigten Einstellungen. Anstelle von Modems können auch andere Hardwarekomponenten, wie etwa ISDN-Karten oder externe ISDN-Adapter, ermittelt werden. Sind diese Hardwarekomponenten sowie die benötigten Einstellungen in den Schritten 310 und 320 ermittelt, werden die Modems in Schritt 330 der Reihe nach angesprochen, um den Server 100 anzurufen und mit dem Server eine Verbindung zu erstellen. Die hierzu benötigte Telefonnummer ist dem Softwareprogramm vorgegeben. Das Programm fügt nach dem ersten erfolglosen Durchlauf aller Modems eine Null zur Amtsholung zu der Telefonnummer hinzu und wiederholt den Vorgang.

Wird im Schritt 340 eine aktive Verbindung erkannt, so speichert das Programm Daten, die dieses Modem identifizieren, um das Modem später als erstes Gerät ansprechen zu können. Weiter versucht das Programm ein zweites Modem o.ä. aufzufinden, um für eine Doppelkanalverbindung eine zweite Leitung eröffnen zu können. Auch diese Informationen speichert das Programm als Einstellung des Programms ab. Schließlich begibt sich das Programm in Schritt 350 in eine Warteposition.

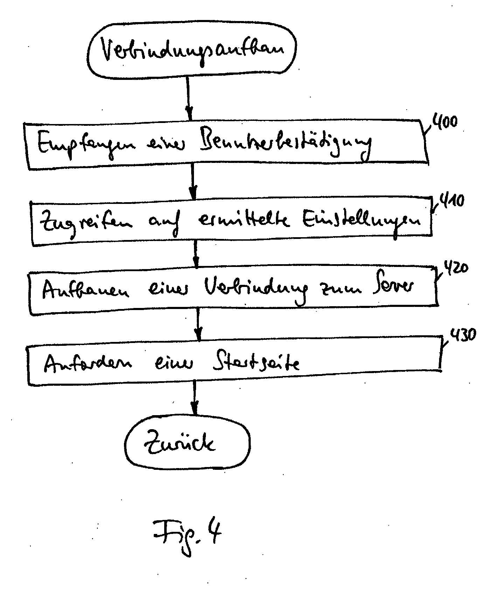

Ist die in Schritt 210 von Figur 2 durchgeführte Hardwareerkennung somit abgeschlossen, wird der Verbindungsaufbau in Schritt 220 durchgeführt. Dies ist in Figur 4 näher dargestellt.

Zunächst bestätigt der Endnutzer in Schritt 400 durch Betätigung einer Taste oder Schaltfläche auf der Programmoberfläche, dass eine Verbindung aufgebaut werden soll. Das Programm greift dann in Schritt 410 auf die zuvor ermittelten Einstellungen zu und baut in Schritt 420 eine Verbindung zum Server auf. Nach erfolgtem Verbindungsaufbau fordert das Programm eine definierte Startseite vom Server 100 an (Schritt 430). Diese Seite wird von dem Videostreamserver 100 zur Verfügung gestellt und enthält vorzugsweise Verlinkungen, die zu Tarifänderungsinformationen oder weiteren Seiten führen.

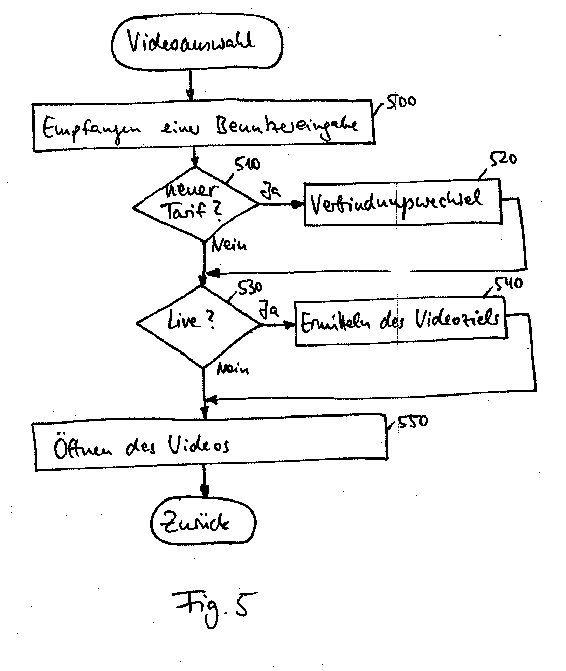

Der Benutzer wählt nun in Schritt 230 von Figur 2 ein Video aus. Hierzu wird, wie in Figur 5 dargestellt, am Clientrechner 160, 170, 180 zunächst eine Benutzereingabe empfangen (Schritt 500).

Stößt das auf dem Clientrechner 160, 170, 180 laufende Programm hierbei auf eine Seite mit der Endung "tarif, html", so lädt es diese Datei in eine unsichtbare Instanz des integrierten Webbrowsers und wertet die im Kopf dieser Tarifseite enthaltenen Informationen über eine neue Verbindung aus, z. B. Informationen betreffend einen Tarif, eine Vorwahl, eine Rufnummer und eine neue URL. Somit stellt das Programm in Schritt 510 fest, ob ein Tarifwechsel erforderlich ist. Ist dies der Fall, beendet das Programm nach Prüfung und Bestätigung durch den Kunden die aktuelle Verbindung und baut eine neue Verbindung mit den neuen Daten auf (Schritt 520). Bei erfolgreicher Verbindung wird die neue Seite mit Hilfe der ermittelten URL angefordert und im sichtbaren Browser angezeigt.

Ist der gemäß der Videoauswahl des Benutzers festgestellte Tarif durch Wahl der zu diesem Tarif gehörenden Verbindung zwischen Client und Server eingestellt, so wird in Schritt 530 überprüft, ob eine Livestreamingübertragung angefordert wird. Stösst das Programm auf eine Seite, deren Titelzeile mit dem Stichwort "%LlVE%" beginnt, so wertet es diese Informationen ebenfalls im Hintergrund aus und gewinnt somit die IP-Adresse und das eigentliche Videoziel des Liveevents (Schritt 540). Die Informationen werden in einer globalen Variable im Programm abgelegt, so dass immer die letzten abgelegten Informationen abrufbar sind.

Stößt das Programm nun auf eine Internetseite mit dem Namen "video.html", so startet es eine Instanz des Windows®-Media-Players oder einer vergleichbaren Software, die in dem Programm integriert ist, und gibt dieser Software als Quelle das aus der Titelzeile gewonnene Videoziel an. Alternativ hierzu kann von einer Internetseite aus mittels eines Hypertextlinks auch direkt auf das Videoziel verzweigt werden. Die Abspielsoftware versucht nun ihrerseits das Video zu öffnen und anzuzeigen (Schritt 550).

Das geöffnete Video wird nun im Videostreamingverfahren in Schritt 240 angezeigt.

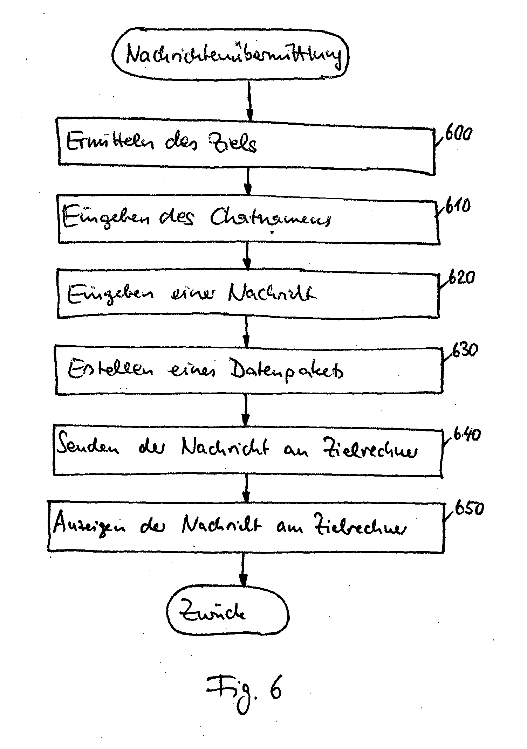

Während des Videostreamings verfügt der Endnutzer über die Möglichkeit, Chatnachrichten in das Studio zu senden. Es wird daher während des Videostreamings in Schritt 250 überprüft, ob der Endnutzer von der Chatoption Gebrauch machen möchte. Ist dies der Fall, so wird der in Figur 6 dargestellte Prozess durchgeführt.

Zunächst wird in Schritt 600 das Ziel der Chatnachrichten ermittelt. Dann kann der Nutzer in Schritt 610 einen Chatnamen vergeben und in Schritt 620 eine Nachricht eingeben. Hat der Nutzer bereits zu einem früheren Zeitpunkt einen Chatnamen vergeben, kann Schritt 610 auch entfallen. Der Nutzer verschickt dann auf Knopfdruck ein Datenpaket an den Zielencoder 110, 140, 150 in Schritt 640. Das Datenpaket wurde zuvor in Schritt 630 vom Clientrechner 160, 170, 180 erstellt. Die im Zielrechner 110, 140, 150 vom Clientrechner 160, 170, 180 empfangenen Chatnachrichten schreibt der Encoderrechner dann in ein auf dem Kontrollmonitor 130 sichtbares Chatfenster (Schritt 650). Neben der Nachricht erscheint zusätzlich auch der Name des Verfassers der Nachricht.

Wie bereits erwähnt, kann in einer anderen Ausgestaltung die Versendung der Chatnachrichten anstelle der direkten Übertragung von Client zu Encoder auch über den Server erfolgen. Bevorzugt ist jedoch die direkte Nachrichtenübermittlung.

Wird nun wiederum auf Figur 2 Bezug genommen, so endet das Videostreaming (im Flussdiagramm nicht gezeigt) entweder durch Zeitablauf automatisch oder in Reaktion auf eine Benutzereingabe am Clientrechner 160, 170, 180. Der Endnutzer verfügt nun in Schritt 270 über die Möglichkeit, ein neues Video auszuwählen. Ist dies der Fall, so verzweigt der Prozess zurück zu Schritt 230. Wünscht der Endnutzer kein weiteres Video, d. h. auch keine weitere Liveschaltung in ein diensteanbietendes Studio, so wird in Schritt 280 die stehende Verbindung zwischen Client 160, 170, 180 und Server 100 abgebaut.

In einer bevorzugten Ausgestaltung der Erfindung werden die in der europäischen Patentanmeldung 01120099.5 beschriebene Verbindungstechnik zwischen Client und Server sowie die dort beschriebenen Mechanismen der variablen Tarifierbarkeit angewendet, einschließlich der Zuordnung verschiedener Telefonleitungen zu spezifischen Tarifen und des Wechsels zwischen diesen.

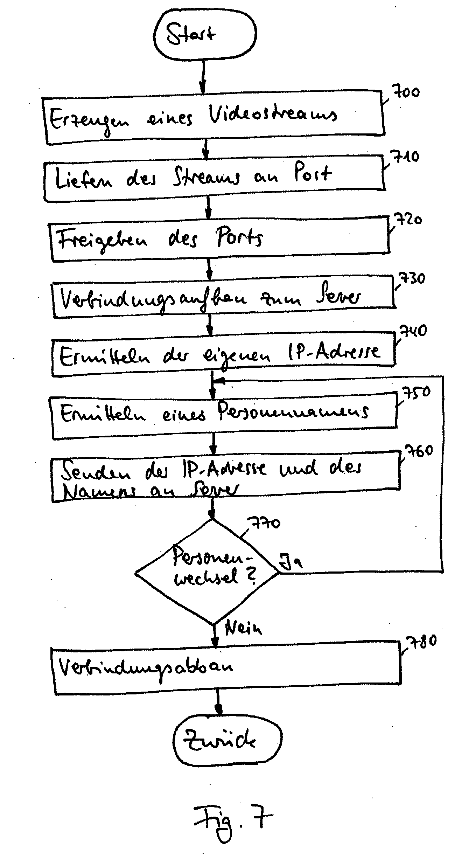

Wie bereits beschrieben, steht am Ort des Liveevents zum Anbieten von Livequellen ein Encoderrechner 110, 140, 150 bereit, der als handelsüblicher Personalcomputer ausgestattet sein kann. Der Encoderrechner 110, 140, 150 ist mit dem Videostreamserver 100 vorzugsweise über eine Telefonleitung verbunden. Es können jedoch in anderen Ausgestaltungen auch Netzwerkverbindungen oder Standleitungen zur Anwendung kommen. Der Encoder nutzt beispielsweise den Windows-Media-Encoder, der aus einem Videosignal, welches an einer entsprechenden Videoeingangskarte des Rechners zur Verfügung gestellt wird, einen WMV-Stream (Windows Media Video) oder einen Videostream in einem anderen Datenformat erzeugt (Schritt 700 von Figur 7). Dieser Stream wird standardmäßig an einem Port des Encoderrechners zur Verfügung gestellt (Schritt 710). Drückt der Liveeventanbieter den Onlineknopf des Encoders 100, 140, 150, so gibt er hiermit den Port im Schritt 720 frei.

Der Rechner stellt nun in Schritt 730 eine Verbindung zum Videostreamserver 100 her und ermittelt im Schritt 740 die eigene IP-Adresse, die dynamisch von einem DHCP-Server vergeben wurde. Diese IP-Adresse schickt der Encoderrechner nun zusammen mit dem in Schritt 750 ermittelten Personennamen der startenden Person an den Server 100 (Schritt 760). Die Ermittlung eines Personennamens in Schritt 750 durch den Encoder 110, 140, 150 erfolgt aus einer Liste mit Personen, die zuvor vom System eingegeben wurde und aus der sich der Nutzer den gewünschten Namen heraussucht.

Ist ein Personenwechsel gewünscht (Schritt 770), so drückt die neue Person nach Auswahl eines neuen Namens in Schritt 750 einen entsprechenden Knopf, woraufhin der Encoder in Schritt 760 ein Datenpaket mit der Wechselinformation an den Server 100 sendet.

Wird die Verbindung in Schritt 780 getrennt, so schickt der Encoder zunächst eine Offline-Nachricht an den Server 100 und trennt erst dann die Verbindung.

Aus der vorhergehenden Beschreibung ist ersichtlich, dass eine Echtzeit-Streamingtechnik bereitgestellt wird, bei der eine Vielzahl von Endnutzern über ISDN- oder andere Telefonleitungen mit einem Server verbunden ist und der Server wiederum eine Vielzahl von Telefonverbindungen oder anderen Verbindungen mit Encodern unterhält bzw. unterhalten kann. Auf jeder Ebene des Systems, d.h. auf Seiten der Encoder, Server oder Endnutzer, kann die entsprechende Implementierung durch handelsübliche Computer erfolgen. Die Encoder sind vorzugsweise mit Videokameras verbunden, um in Echtzeit, also live, Videobilder zu erzeugen und zu codieren. Diese werden an den Server weitergeleitet und an die jeweiligen Endnutzer verteilt. Zusätzlich werden in der bevorzugten Ausgestaltung Internetprotokolle auf Telefondirektverbindungen verwendet und dem Endnutzer die Möglichkeit einer variablen Tarifierbarkeit bereitgestellt.

Ferner enthält die bevorzugte Ausgestaltung der Erfindung, die Möglichkeit der Durchführung eines Chats, bei der der Endnutzer Textnachrichten an den Encoder oder den Server sendet. Vorzugsweise ist der Chatdatentransfer unidirektional vom Client zum Encoder, wobei in rückwärtiger Richtung Informationen über den Videostream übertragen werden können. Zusätzlich empfängt der Server weiterhin die Online-, Offline- und Wechsel-Informationen, fügt Datum und Uhrzeit hinzu und fertigt hieraus ein Protokoll, welches er sowohl anzeigt als auch in eine vorbestimmte Datei abspeichert. Zudem greift der Server über eine Active-X-Steuerkomponente direkt auf den Windows-Media-Service zu, der es ermöglicht, die Videostreams auf die einzelnen Betrachter zu verteilen. Dieser Dienst wird bei jeder Einwahl eines Encoders für diesen Encoder neu gestartet, da er die neue IP-Adresse des Encoders benötigt.

Weiterhin aktualisiert der Server zum Zeitpunkt der Ein-, Um- und Abwahl eines Encoders beliebige HTML-Seiten auf dem Webserver des Videostreamservers 100, so dass der betrachtende Kunde Notiz vom Wechsel bzw. der Online-/Offline-Schaltung nehmen kann. Außerdem wird die IP-Adresse des Encoders in der Titelzeile abgespeichert, um dem Chatmodul das entsprechende Ziel aufzuzeigen.

In einer bevorzugten Ausgestaltung sind diese HTML-Seiten zusätzlich mit einem "Tag" gekennzeichnet, der bewirkt, dass ein Webbrowser und somit auch das Internetportal die angegebene Seite in einem bestimmten zeitlichen Abstand neu lädt, um von allen Änderungen auf dieser Seite zu profitieren. Die zeitliche Aktualisierung erfolgt bevorzugt alle fünf Sekunden.

Schließlich erhält der Endnutzer mit der erfindungsgemäßen Livestreamingtechnik ein Portal, mit dem nicht nur Livequellen in Ton und Bild angezeigt werden können, sondern auch auf dem Videostreamserver 100 vorab gespeicherte Videodaten.

## Patentansprüche

1. Videostreamserver zur Übertragung von Live-Videostreamdaten, umfassend:
eine erste Datensendeempfangseinrichtung (100c) zum Empfangen von Anforderungsdaten von einem Clientrechner (160, 170, 180) einer Vielzahl von Clientrechnern, wobei die Anforderungsdaten Anforderungsdaten für Streamingdaten sind;
eine Steuereinrichtung (100b) zum Auswerten der Anforderungsdaten und Bestimmen von Identifikationsdaten, die eine Streamingquelle (110, 140, 150) für die Streamingdaten aus einer Vielzahl von Streamingquellen angeben; und
eine zweite Datensendeempfangseinrichtung (100a) zum Anfordern der Streamingdaten von der durch die Identifikationsdaten angegebenen Streamingquelle und Empfangen der angeforderten Streamingdaten von der Streamingquelle,
wobei die erste Datensendempfangseinrichtung mit dem Clientrechner über wenigsten eine Direktverbindung verbunden ist, und
wobei die erste Datensendeempfangseinrichtung eingerichtet ist zum Senden der von der zweiten Datensendeempfangseinrichtung empfangenen Streamingdaten an den Clientrechner, von dem die Anforderungsdaten empfangen worden sind.

2. Videostreamserver nach Anspruch 1, wobei die erste Datensendeempfangseinrichtung eingerichtet ist zum Senden von Daten an den Clientrechner über die Direktverbindung in einem Datenformat, das von einem Webbrowser interpretierbar ist.

3. Videostreamserver nach Anspruch 2, wobei die erste Datensendeempfangseinrichtung eingerichtet ist zum regelmäßigen Aktualisieren der von dem Webbrowser interpretierbaren Daten.

4. Videostreamserver nach einem der Ansprüche 1 bis 3, wobei die erste Datensendeempfangseinrichtung, die Steuereinrichtung und die zweite Datensendeempfangseinrichtung eingerichtet sind zum unidirektionalen Weiterleiten von Textnachrichten von dem Clientrechner an die Streamingquelle.

5. Videostreamserver nach einem der Ansprüche 1 bis 4, wobei die erste Datensendeempfangseinrichtung und die Steuereinrichtung eingerichtet sind zum Wechseln der Direktverbindung zwischen den Videostreamserver und dem Clientrechner auf eine andere Direktverbindung, der ein anderer Tarif zugeordnet ist.

6. Videostreamcodiervorrichtung mit Datensendeempfangsmitteln zum Empfangen von Anforderungsdaten von einem Videostreamserver (100) nach einem der Ansprüche 1 bis 5 und Senden von Videostreamdaten an den Videostreamserver in Erwiderung darauf.

7. Videostreamcodiervorrichtung nach Anspruch 6, umfassend:
wenigstens zwei Videokameras (120),
wobei die Videostreamcodiervorrichtung zwischen den Videokameras umschaltbar ist, um die Videostreamdaten durch Codieren der Kameraausgangssignale einer der Videokameras zu erzeugen.

8. Videostreamabspielvorrichtung, umfassend:
Mittel zum Erzeugen von Anforderungsdaten für Streamingdaten von einer aus einer Vielzahl von Streamingquellen (110, 140, 150);
Mittel zum Aufbau einer Direktverbindung zu dem Videostreamserver (100) nach einem der Ansprüche 1 bis 5 und zum Senden der erzeugten Anforderungsdaten an den Videostreamserver; und
Mittel zum Empfangen der von der Streamingquelle angeforderten Videostreamdaten von dem Videostreamserver.

9. Computersystem, umfassend:
einen Videostreamserver (100) nach einem Ansprüche 1 bis 5;
eine Vielzahl von Videostreamcodiervorrichtungen (110, 140, 150) nach Anspruch 6 oder 7; und
eine Vielzahl von Videostreamabspielvorrichtungen (160, 170, 180) nach Anspruch 8.

10. Verfahren zum Betreiben eines Videostreamservers (100), mit den folgenden Schritten:
Empfangen von Anforderungsdaten für Streamingdaten von einem Clientrechner (160, 170, 180) einer Vielzahl von Clientrechnern über eine Direktverbindung;
Auswerten der empfangenen Anforderungsdaten;
Bestimmen von Identifikationsdaten, die eine Streamingquelle angeben;
Anfordern der Streamingdaten von der durch die Identifikationsdaten angegebenen Streamingquelle;
Empfangen der Streamingdaten von der Streamingquelle; und
Senden der empfangenen Streamingdaten an den Clientrechner.
